# EUROPÄISCHE PATENTANMELDUNG

(11) **EP 3 926 506 A1**
(43) Veröffentlichungstag der Anmeldung: **22.12.2021**
(21) Anmeldenummer: 20181131.2
(22) Anmeldetag: 19.06.2020
(51) Int. Cl.: G06F 21/64, H04L 29/06

(54) **COMPUTER-IMPLEMENTIERTES VERFAHREN ZUR SPEICHERUNG VON ABONNEMENTDATEN IN EINEM NETZWERK VERNETZTER RECHENEINHEITEN, COMPUTERPROGRAMM UND NETZWERK**

(71) Anmelder: Siemens Aktiengesellschaft, 80333 München (DE)
(72) Erfinder: Sauer, Markus, 81739 München (DE); Singh, Saurabh Narayan, 81739 München (DE)

(57) **Zusammenfassung**

Bei dem computer-implementiertes Verfahren zur Speicherung von Abonnementdaten in einem Netzwerk vernetzter Recheneinheiten mittels einer verteilten Transaktionsdatenbank wird zumindest eine verteilte und mit Blöcken gebildete Transaktionsdatenbank herangezogen und es werden die Abonnementdaten in zumindest einem Block der Transaktionsdatenbank gespeichert, wobei der Block mittels einer echten Teilmenge der Recheneinheiten des Netzwerks gespeichert ist und wobei die Teilmenge der Recheneinheiten solche Recheneinheiten umfasst, welche die Abonnementdaten bereitstellen.

Das Computerprogramm ist direkt in einen Speicher einer elektronischen Recheneinrichtung ladbar und weist Programm-Mittel auf, um die Schritte eines solchen Verfahrens auszuführen, wenn das Programm in einer Recheneinrichtung ausgeführt wird.

Der elektronisch lesbare Datenträger weist darauf gespeicherte elektronisch lesbare Steuerinformationen auf, welche zumindest ein solches Computerprogrammumfassen und derart ausgestaltet sind, dass sie bei Verwendung des Datenträgers in einer elektronischen Recheneinrichtung ein solches Verfahren durchführen.

## Beschreibung

Computer-implementiertes Verfahren zur Speicherung von Abonnementdaten in einem Netzwerk vernetzter Recheneinheiten, Computerprogramm und Netzwerk

Die Erfindung betrifft ein computer-implementiertes Verfahren zur Speicherung von Abonnementdaten in einem Netzwerk vernetzter Recheneinheiten mittels einer oder mehrerer verteilten Transaktionsdatenbanken, ein Computerprogramm zur Speicherung von Abonnementdaten in einem Netzwerk vernetzter Recheneinheiten mittels einer oder mehrerer verteilten Transaktionsdatenbanken sowie ein Netzwerk vernetzter Recheneinheiten, mittels welchem das computer-implementierte Verfahren zur Speicherung von Abonnementdaten mittels einer verteilten Transaktionsdatenbank möglich ist.

In IoT-Umgebungen, wie sie insbesondere bei Fertigungsstraßen oder Kraftwerken zum Einsatz kommen, kommunizieren Systemkomponenten miteinander. Diese Kommunikation wird beispielsweise durch mittels kryptografischer Schlüssel gesichert. Häufig handelt es sich um vertrauenswürdige, geschlossene Umgebungen, bei welchen eine zentrale Komponente die Vertrauenswürdigkeit der Umgebung herstellt, etwa in Form einer sogenannten *"Certificate Authority"* - einer sicheren Schlüsselvalidierungs- und -ausgabestelle. Beispielsweise ist eine solche zentrale Komponente für den Austausch kryptografischer Schlüssel zuständig.

Solche geschlossenen, vertrauenswürdigen Umgebungen sind jedoch leicht angreifbar, da die Vertrauenswürdigkeit der geschlossenen Umgebung von der Integrität der zentralen Komponente abhängt. Angriffe auf die zentrale Komponente oder Ausfälle der zentralen Komponente können daher die Funktionsfähigkeit einer solchen geschlossenen vertrauenswürdigen Umgebung beeinträchtigen oder verhindern. Zudem sind solche geschlossenen, vertrauenswürdigen Umgebungen nicht besonders flexibel, da die Erweiterung eines solchen Systems um weitere Komponenten, beispielsweise IoT-Komponenten, zentral verwaltet werden muss.

Es ist daher bekannt, potenziell vertrauenslose Umgebungen einzusetzen, welche eine zentrale, vertrauenswürdige Komponente nicht erfordern. Solche Umgebungen können beispielsweise mittels Blockchains bereitgestellt werden.

Blockchains weisen jedoch ernste Probleme hinsichtlich der Skalierung solcher Umgebungen sowie hinsichtlich der Effizienz bei dem Betrieb solcher Umgebungen auf. Denn es ist ein bekanntes Problem, dass Daten redundant über Recheneinheiten verteilt, d. h. in Kopien auf diesen Recheneinheiten hinterlegt, vorgehalten werden müssen. Der Speicherbedarf sowie der Kommunikationsbedarf zwischen Recheneinheiten, welche eine solche Blockchain betreiben, steigt daher enorm mit der Anzahl beteiligter Recheneinheiten und der Nutzungsdauer des Systems an. Bislang gibt es kein Konzept, eine dynamische Skalierung von mittels Blockchain realisierten IoT-Umgebungen zu realisieren.

Vor diesem Hintergrund des Standes der Technik ist es daher Aufgabe der Erfindung, ein computer-implementiertes Verfahren zur Speicherung von Daten in einem Netzwerk vernetzter Recheneinheiten mittels einer oder mehrerer verteilten Transaktionsdatenbanken anzugeben, welche sich hinsichtlich der Anzahl der vernetzten Recheneinheiten und der zu speichernden Daten leicht skalieren lässt. Zudem ist es Aufgabe der Erfindung, ein Computerprogramm anzugeben, mittels welchem ein solches Verfahren ausführbar ist. Zudem ist es Aufgabe der Erfindung, ein Netzwerk vernetzter Recheneinheiten anzugeben, mittels welchem ein solches Verfahren ausführbar ist.

Diese Aufgabe der Erfindung wird mit einem computer-implementierten Verfahren zur Speicherung von Daten in einem Netzwerk vernetzter Recheneinheiten mittels einer verteilten Transaktionsdatenbank mit den in Anspruch 1 angegebenen Merkmalen sowie mit einem Computerprogramm mit den in Anspruch 12 angegebenen Merkmalen sowie mit einem Netzwerk vernetzter Recheneinheiten mit den in Anspruch 13 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen computer-implementierten Verfahren zur Speicherung von Daten in einem Netzwerk vernetzter Recheneinheiten mittels einer oder mehrerer verteilten Transaktionsdatenbanken wird zumindest eine verteilte und mit Blöcken gebildete Transaktionsdatenbank herangezogen und es werden Daten in Form von Abonnementdaten in zumindest einem Block der Transaktionsdatenbank gespeichert, wobei der Block mittels einer echten Teilmenge der Recheneinheiten des Netzwerks gespeichert ist, wobei die Teilmenge der Recheneinheiten solche Recheneinheiten umfasst, welche die Abonnementdaten bereitstellen und/oder empfangen.

Mittels des erfindungsgemäßen Verfahrens muss der Block mit den Abonnementdaten folglich nicht mittels sämtlicher Recheneinheiten des Netzwerks gespeichert werden, sondern es genügt, den Block mit den Abonnementdaten nur auf solchen Recheneinheiten gespeichert zu halten, welche die Abonnementdaten bereitstellen und/oder empfangen.

Unter Recheneinheiten, welche Abonnementdaten bereitstellen, sind Recheneinheiten zu verstehen, welche zumindest ein Abonnementdatum bereitstellen. Da folglich die Blöcke mit den Abonnementdaten nur mittels solcher Recheneinheiten gespeichert sind, welche die Abonnementdaten bereitstellen, müssen die Blöcke mit den Abonnementdaten nicht auf jeder Recheneinheit des Netzwerks bereitgehalten werden, sondern es genügt, die Blöcke mittels der Recheneinheiten der echten Teilmenge redundant zu speichern. Auf diese Weise wächst bei einer zunehmenden Anzahl von Recheneinheiten des Netzwerks der Speicherbedarf nicht notwendig an, da beispielsweise die betrachtete echte Teilmenge der Recheneinheiten mit einer Zunahme der Recheneinheiten des Netzwerks nicht notwendigerweise selbst mitwächst. Daher skaliert der Speicherbedarf bei dem erfindungsgemäßen Verfahren nicht notwendigerweise überproportional zur Anzahl der Recheneinheiten des Netzwerks, sodass der Speicherbedarf bei dem erfindungsgemäßen Verfahren auch bei einer zunehmenden Anzahl von Recheneinheiten begrenzt bleibt. Ebenso bleibt auch der Kommunikationsaufwand bei dem erfindungsgemäßen Verfahren bei zunehmender Anzahl von Recheneinheiten vorteilhaft begrenzt.

Es versteht sich, dass unter einer echten Teilmenge der Recheneinheiten des Netzwerks eine Teilmenge zu verstehen ist, welche nicht sämtliche Recheneinheiten des Netzwerks umfasst. Die echte Teilmenge der Recheneinheiten ist also kleiner als die Gesamtmenge der Recheneinheiten des Netzwerks und bildet eine Untermenge, welche von der Gesamtmenge verschieden ist.

Es versteht sich, dass eine verteilte Transaktionsdatenbank im Sinne dieser Erfindung eine Datenbank bedeutet, welche im englischen Sprachgebrauch auch als "Distributed Ledger" bezeichnet wird.

Unter einem Block im Sinne dieser Erfindung ist ein Datensatz zu verstehen, welcher beispielsweise in an sich bekannter Weise mit anderen Datensätzen kryptographisch zu einer Blockchain verkettet ist. Vorzugsweise ist die verteilte Transaktionsdatenbank mit einer oder mehreren Blockchains gebildet.

Unter einem Speichern mittels einer Recheneinheit ist ein Speichern in einem Speicher der Recheneinheit und/oder in einem der Recheneinheit zugeordnetem Speicher zu verstehen. Zweckmäßig ist dabei der Speicher ein Arbeitsspeicher und/oder ein Datenträger, insbesondere eine Festplatte und/oder ein der Recheneinheit zugeordneter und/oder mit der Recheneinheit verknüpfter und/oder verbundener Cloudspeicher.

Bei den Recheneinheiten im Sinne dieser Erfindung handelt es sich zweckmäßig um Computer und/oder Server. Grundsätzlich kann eine Recheneinheit im Sinne dieser Erfindung auch als logische Recheneinheit gebildet sein, welche ihrerseits über ein verteiltes Rechnernetzwerk realisiert ist, etwa über ein Cloud-Netzwerk.

Insbesondere ist es mittels des erfindungsgemäßen Verfahrens möglich, dass zu dem Ressourcenaufwand, welcher zur Speicherung des Blocks mit den Abonnementdaten erforderlich ist, nur solche Recheneinheiten beitragen, welche zumindest einen Teil der in dem Block gespeicherten Abonnementdaten bereitstellen. Auf diese Weise lässt sich der Ressourcenaufwand also über die Recheneinheiten des Netzwerks verteilen, welche die Abonnementdaten nutzen. Gleiches gilt für die Kommunikationsressourcen, welche für eine redundante Speicherung des Blocks mittels der Recheneinheiten der echten Teilmenge erforderlich sind. Auch die Kommunikationsressourcen lassen sich folglich unter denjenigen Recheneinheiten des Netzwerks aufteilen, welche die Abonnementdaten nutzen. Zudem lassen sich mittels des erfindungsgemäßen Verfahrens aufgrund der Speicherung der Blöcke mittels der Recheneinheiten der echten Teilmenge Vertraulichkeitsanforderungen leicht gewährleisten, da es nicht erforderlich ist, die Blöcke mit den Abonnementdaten mittels Recheneinheiten zu speichern, welche nicht zur echten Teilmenge gehören.

Zweckmäßig handelt es sich bei den Abonnementdaten im Sinne dieser Erfindung um Daten, welche von einer oder mehreren Recheneinheiten veröffentlicht und von einer oder mehreren Recheneinheiten abonniert werden. Die Abonnementdaten müssen nicht notwendigerweise Informationen über die Abonnementdaten bereitstellende Recheneinheiten und/oder die Abonnementdaten abonnierende Recheneinheiten umfassen, können diese Informationen in bevorzugten Weiterbildungen der Erfindung allerdings aufweisen.

Vorteilhaft wird bei dem erfindungsgemäßen Verfahren der Block mittels jeder der Recheneinheiten der Teilmenge gespeichert. In dieser Weiterbildung der Erfindung wird der Block redundant gespeichert, d. h. es liegt eine Kopie des Blocks auf jeder Recheneinheit der echten Teilmenge vor. Damit ist der Block insbesondere transparent und manipulationssicher innerhalb der echten Teilmenge gespeichert, da jede Recheneinheit der echten Teilmenge ihre Version des Blocks mit denjenigen Versionen des Blocks anderer Recheneinheiten vergleichen kann. Zudem ist der Block besonders ausfallsicher gespeichert, da Kopien des Blocks vorgehalten bleiben, solange eine einzige Recheneinheit der echten Teilmenge den Block und damit auch die in ihm gespeicherten Abonnementdaten bereithält. Es versteht sich, dass die echte Teilmenge im Sinne der vorliegenden Erfindung vorzugsweise zumindest zwei Recheneinheiten umfasst. Infolge des verbesserten Skalierungsverhaltens lassen sich Abonnementdaten mit dem erfindungsgemäßen Verfahren besonders effizient speichern. Vorteilhafterweise lässt sich mittels des erfindungsgemäßen Verfahrens der Zugriff auf in dem Block gespeicherte Daten besonders feingranular einstellen.

In einer vorteilhaften Weiterbildung des erfindungsgemäßen Verfahrens umfassen die Abonnementdaten Publikationsdaten. Insbesondere sind die Abonnementdaten Publikationsdaten. Alternativ oder zusätzlich und ebenfalls bevorzugt sind die Abonnementdaten Subskriptionsdaten oder die Abonnementdaten umfassen Subskriptionsdaten. Bei der Übertragung von Abonnementdaten werden typischerweise Daten publiziert und/oder abonniert. In der Regel steht also fest, welche der Recheneinheiten des Netzwerks Daten publiziert und/oder abonniert. Diese Information wird in Form von Publikationsdaten in dem Block gespeichert, welche Informationen darüber enthalten, welche Recheneinheiten Daten zur Verfügung stellen und es werden Abonnementdaten in Form von Subskriptionsdaten in dem Block gespeichert, welche Informationen darüber enthalten, welche Recheneinheiten Daten anfordern. Geeignet enthält das Abonnementdatum oder enthalten die Abonnementdaten daher Informationen darüber, welche Recheneinheit Daten zur Verfügung stellt und/oder welche Recheneinheit die Daten abruft. Mittels dieser Abonnementdaten lässt sich folglich eine echte Teilmenge der Recheneinheiten des Netzwerks bestimmen, welche für einen bestimmen Block der Transaktionsdatenbank Abonnementdaten bereitstellen. Zweckmäßig kann die echte Teilmenge der Recheneinheiten des Netzwerks auf diejenigen Recheneinheiten begrenzt werden, welche Abonnementdaten für diesen Block bereitstellen. In weiteren bevorzugten Weiterbildungen können jedoch noch zusätzliche Recheneinheiten von der echten Teilmenge umfasst sein, welche beispielsweise als Koordinations- oder Administrationskomponenten Recheneinheiten der echten Teilmenge sind.

In einer vorteilhaften Weiterbildung des Verfahrens gemäß der Erfindung werden die Abonnementdaten mittels eines Abonnementbusses festgelegt und/oder ausgetauscht. Ein solcher Abonnementbus übernimmt das Zusammenführen von Publikationsdaten und Subskriptionsdaten. D. h. der Abonnementbus umfasst seinerseits Informationen darüber, welche Recheneinheiten Publikationsdaten und/oder Subskriptionsdaten bereitstellen. Folglich liefert auch der Abonnementbus Informationen, mittels welcher sich die echte Teilmenge der Recheneinheiten des Netzwerks bestimmen lässt.

Bevorzugt werden bei dem erfindungsgemäßen Verfahren die Abonnementdaten mittels eines Brokers festgelegt und/oder ausgetauscht. Analog zu einem Abonnementbus übernimmt in dieser Weiterbildung der Erfindung der Broker die Zusammenführung von Publikationsdaten und Subskriptionsdaten. D. h. in diesem Fall übernimmt der Broker, welcher insbesondere eine elektronische Komponente innerhalb eines Rechenmoduls und/oder ein Softwarekomponente ist, eine Zusammenführung der beteiligten Recheneinheiten zur Vereinbarung eines Abonnements. D. h. auch der Broker enthält Informationen darüber, welche Recheneinheiten Abonnementdaten in einem Block der Transaktionsdatenbank speichern oder zu speichern beabsichtigen. Auf diese Weise können auch Informationen des Brokers herangezogen werden, um die echte Teilmenge der Recheneinheiten des Netzwerks zu ermitteln.

Besonders bevorzugt wird bei dem erfindungsgemäßen Verfahren die Teilmenge mittels der Abonnementdaten und/oder mittels des Abonnementbusses oder mittels des Brokers ermittelt. Wie oben beschrieben lassen sich die Abonnementdaten und der Abonnementbus und der Broker jeweils heranziehen, die jeweiligen Recheneinheiten zu identifizieren, welche Abonnementdaten in dem Block speichern. Auf diese Weise können Abonnementdaten und/oder der Abonnementbus und/oder der Broker herangezogen werden, die echte Teilmenge zu ermitteln.

Idealerweise ist bei dem erfindungsgemäßen Verfahren der Blöcke ein Teil eines Pfads, der mittels der echten Teilmenge der Recheneinheiten gespeichert wird. Auf diese Weise können mehrere direkt miteinander verkettete Blöcke, welche lediglich Abonnementdaten einer echten Teilmenge der Recheneinheiten enthalten, allein in dieser echten Teilmenge der Recheneinheiten gespeichert werden. Zweckmäßigerweise können diese Blöcke in der Form des Pfades als solcher Pfad, d.h. als Ganzes, mittels der echten Teilmenge der Recheneinheiten gespeichert werden. Beispielsweise kann ein solcher Pfad mit einer Blockchain gebildet sein. Da diese Blockchain folglich einen Teil der verteilten Transaktionsdatenbank bildet, kann diese Blockchain auch als Micro-Blockchain bezeichnet werden. Bevorzugt bildet daher bei dem erfindungsgemäßen Verfahren der Pfad eine Blockchain und/oder eine Micro-Blockchain, welche im Rahmen dieser Erfindung auch kurz als Microchain bezeichnet wird.

Vorzugsweise weist bei dem Verfahren gemäß der Erfindung die verteilte Transaktionsdatenbank mehrere Pfade, insbesondere Blockchains und/oder Microchains auf, deren Blöcke und/oder gesamte Pfade mittels jeweils echter Teilmengen von Recheneinheiten des Netzwerks gespeichert werden, wobei die echten Teilmengen eine von den echten Teilmengen verschiedene, insbesondere leere, Schnittmenge aufweisen. Auf diese Weise können unterschiedliche echte Teilmengen jeweils einen Pfad der verteilten Transaktionsdatenbank speichern. Dabei können folglich Recheneinheiten Blöcke eines Pfades speichern, nicht aber Blöcke eines anderen Pfades. Es lassen sich also mittels des erfindungsgemäßen Verfahrens mehrere Pfade weitestgehend autonom und ohne Wechselwirkungen untereinander mittels der Recheneinheiten des Netzwerks speichern.

Das erfindungsgemäße Computerprogramm ist direkt in einen Speicher einer Recheneinrichtung des Netzwerks ladbar und weist Programm-Mittel auf, um die Schritte des erfindungsgemäßen Verfahrens, wie es oben beschrieben ist, auszuführen.

Das erfindungsgemäße Netzwerk umfasst vernetzte Recheneinheiten, welche eine verteilte Transaktionsdatenbank mit Blöcken speichert, wobei in die Blöcke Abonnementdaten mittels des vorhergehend beschriebenen erfindungsgemäßen Verfahrens gespeichert werden.

Nachfolgend wird die Erfindung anhand eines in der Zeichnung dargestellten Ausführungsbeispiels näher erläutert.

Es zeigen:
- Figur 1:: eine verteilte Transaktionsdatenbank mit Blöcken, in welchen Abonnementdaten mittels eines erfindungsgemäßen Verfahrens gespeichert werden, realisiert mit einem erfindungsgemäßen Netzwerk schematisch in einer Prinzipskizze sowie
- Figur 2:: einzelne Schritte des erfindungsgemäßen Verfahrens schematisch in einer diagrammatischen Darstellung.

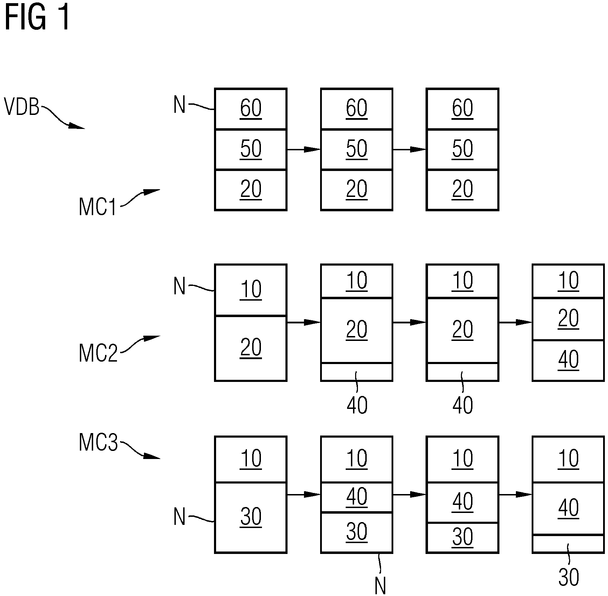

Die in Figur 1 dargestellte verteilte Datenbank VDB weist mehrere Blöcke N auf, in welche Abonnementdaten gespeichert werden. Die verteilte Datenbank VDB ist dabei mittels eines Netzwerks vernetzter Recheneinheiten 10, 20, 30, 40, 50, 60 gespeichert.

Bei den Recheneinheiten 10, 20, 30, 40, 50, 60 handelt es sich um Feldgeräte eines industriellen IoT (IoT = Internet of Things) -Systems, welche untereinander Daten austauschen. Dabei unterliegen die miteinander ausgetauschten Daten bestimmten Rahmenbedingungen: So sollen Daten zwischen den Feldgeräten nur insoweit miteinander ausgetauscht werden, als diese Daten für den Betrieb der Feldgeräte erforderlich sind.

Um dieses zu gewährleisten, wird der Datenaustausch mittels Abonnementdaten, d. h. mittels Publikationsdaten und Subskriptionsdaten verwaltet. Dabei umfassen die Publikationsdaten die jeweilige Recheneinheit 10, 20, 30, 40, 50, 60, welche Daten, wie beispielsweise Messdaten, bereitstellt, sowie Subskriptionsdaten, welche angibt, welche Art von Daten eine bestimmte Recheneinheit anfordert. Publikationsdaten und Subskriptionsdaten werden mittels eines Abonnementbusses miteinander verknüpft, sodass ein Datenaustausch zwischen den Recheneinheiten 10, 20, 30, 40, 50, 60 erfolgen kann.

Diese Datenaustausche sind in Microchains MC1, MC2, MC3 eingetragen, welche jeweils als Blockchains ausgebildet sind und welche jeweils einen Teil der verteilten Datenbank VDB bilden. Die Microchains MC1, MC2, MC3 sind jeweils als Pfad miteinander verketteter Blöcke N gebildet, welche in an sich bekannter Weise miteinander kryptografisch verkettet, d. h. verknüpft sind. Die Microchains MC1, MC2, MC3 sind in an sich bekannter Weise nicht nur auf einer einzelnen Recheneinheit 10, 20, 30, 40, 50, 60 gespeichert, sondern die Microchains MC1, MC2, MC3 sind jeweils verteilt auf mehreren Recheneinheiten 10, 20, 30, 40, 50, 60 redundant gespeichert.

Dabei sind die Microchains MC1, MC2, MC3 nur mittels derjenigen Recheneinheiten 10, 20, 30, 40, 50, 60 gespeichert, welche jeweils an den mittels der Microchains MC1, MC2, MC3 verwalteten Datenaustauschen teilnehmen. Dazu weisen die Blöcke N Abonnementdaten der beteiligten Recheneinheiten 10, 20, 30, 40, 50, 60 auf: So sind in der Microchain MC1 lediglich Abonnementdaten der Recheneinheiten 20, 50, 60 gespeichert, wobei im dargestellten Ausführungsbeispiel mittels der Microchain MC1 auch lediglich ein Datenaustausch zwischen den Recheneinheiten 20, 50, 60 verwaltet wird. Die Microchain MC1 ist lediglich mittels der Recheneinheiten 20, 50, 60 gespeichert. D.h. es liegen lediglich auf den Recheneinheiten 20, 50, 60 Kopien der Blocke N der Microchain MC1 vor.

Ähnlich wird mittels der Microchain MC2 Datenaustausch zwischen den Recheneinheiten 10, 20, 40 verwaltet, wobei wie in Figur 1 dargestellt nicht notwendigerweise jede Recheneinheit 10, 20, 40 in jedem Block N der Microchain MC2 Abonnementdaten speichern muss. Wesentlich ist im gezeigten Ausführungsbeispiel, dass in der Blockchain MC2 nur Abonnementdaten gespeichert sind, welche einen Datenaustausch zwischen den Recheneinheiten 10, 20, 40 verwaltet. Entsprechend wird mittels der Microchain MC3 ein Datenaustausch zwischen den Recheneinheiten 10, 30, 40 verwaltet. Die Microchain MC2 ist lediglich mittels der Recheneinheiten 10, 20, 40 gespeichert. D.h. es liegen lediglich auf den Recheneinheiten 10, 20, 40 Kopien der Blocke N der Microchain MC2 vor.

Analog dazu ist die Microchain MC3 lediglich mittels der Recheneinheiten 10, 30, 40 gespeichert, die Microchain MC2 mittels der Recheneinheiten 10, 20, 40 sowie die Microchain MC1 mittels der Recheneinheiten 20, 50, 60. Es gibt daher keine Recheneinheiten, welche sämtliche Microchains MC1, MC2, MC3 speichern.

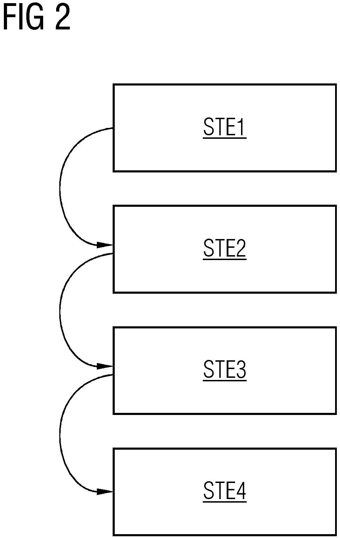

Wie in Figur 2 dargestellt, erfolgt die Speicherung der Abonnementdaten im Einzelnen wie folgt:
Eine Recheneinheit 20 veröffentlicht eine Nachricht zu einem Thema oder abonniert Nachrichten zu einem Thema bei einem Broker (nicht im Einzelnen dargestellt). Der Broker stellt fest, dass keine andere Recheneinheit an einem solchen Thema beteiligt war und fordert die Recheneinheit 20 auf, eine neue Microchain MC1 für dieses Thema zu starten STE1.

Die Recheneinheit 20 startet die neue Microchain MC1 mittels eines Microchain-Managementmoduls (nicht im Einzelnen dargestellt), welches einen ersten Microchain-Knoten N für diese Microchain MC1 bildet und speichert die erforderlichen Signaturschlüssel für die Microchain MC1 STE2.

Andere Recheneinheiten 50, 60 publizieren Daten, d.h. Abonnementdaten, oder abonnieren Abonnementdaten zu diesem Thema bei dem Broker. Der Broker ermittelt, dass eine Microchain MC1 für das Thema existiert und liefert eine Kennung (nicht im Einzelnen dargestellt) zur zugehörigen Microchain MC1 an die Recheneinheiten 50, 60. Die Recheneinheiten 50, 60 senden eine Teilnahmeanforderung an die Microchain MC1. Die Recheneinheit 20 der Microchain MC1 validiert die Teilnahmeanforderung entsprechend vorgehaltenen Teilnahmerichtlinien. Wenn die Teilnahmeanforderung von der Recheneinheit 20 akzeptiert wird, so werden die erforderlichen Konfigurations- und Zugangsinformationen zur Microchain MC1 an die Recheneinheiten 50, 60 sicher übertragen STE3.

Jede Recheneinheit 50, 60 hält Kopien der Microchain MC1 für dieses Thema als Kopie bereit und speichert ihre eigenen Signaturschlüssel und alle erforderlichen Schlüssel für dieses Thema und der zugehörigen Microchain MC1. Die Recheneinheiten 50, 60 senden ihre Publikationsdaten und Subskriptionsdaten an die Microchain MC1 zurück und werden Teil der Microchain MC1 STE4. Eine neue Microchain MC1 ist nun zwischen den Recheneinheiten 20, 50, 60 für ein bestimmtes Thema geschaffen.

Wie anhand Figur 1 ersichtlich, gibt es kein Recheneinheit 10, 20, 30, 40, 50, 60, welche an allen Microchains MC1, MC2, MC3 teilnimmt. D. h. die Schnittmenge der teilnehmenden Recheneinheiten 10, 20, 30, 40, 50, 60 an den Microchains MC1, MC2, MC3 ist im gezeigten Ausführungsbeispiel leer. Grundsätzlich können in weiteren Ausführungsbeispielen nicht leere Schnittmengen zwischen einzelnen Microchains MC1, MC2, MC3 bestehen, welche jedoch nicht sämtliche Recheneinheiten 10, 20, 30, 40, 50, 60 des Netzwerks, auf welchem die verteilte Datenbank VDB gespeichert ist, umfasst.

Im dargestellten Ausführungsbeispiel werden diejenigen Recheneinheiten 10, 20, 30, 40, 50, 60, welche jeweils an einer Microchain MC1, MC2, MC3 teilnehmen, von dem Broker ermittelt. Grundsätzlich können in weiteren, nicht eigens dargestellten Ausführungsbeispielen diejenigen Recheneinheiten, welche an jeweils einer Microchain teilnehmen, auch in den abonnierten Abonnementdaten oder den veröffentlichten Abonnementdaten selbst festgelegt sein. Beispielsweise können die veröffentlichten Abonnementdaten zusätzlich zu inhaltlichen, auszutauschenden Daten die sie veröffentlichenden Recheneinheiten in den Blöcken selbst beinhalten, etwa mittels Kennungen wie insbesondere IP-Adressen oder MAC-Adressen. Genauso können diejenigen Recheneinheiten, welche diese Abonnementdaten abonnieren, Kennungen für die abonnierenden Recheneinheiten wie insbesondere IP-Adressen oder MAC-Adressen, in Blöcke der Microchain selbst als weitere Abonnementdaten eintragen. In diesen Ausführungsbeispielen kann die echte Teilmenge der Recheneinheiten, mittels welchen die jeweilige Microchain gespeichert werden soll, anhand der Abonnementdaten ermittelt werden.

## Patentansprüche

1. Computer-implementiertes Verfahren zur Speicherung von Dateien in einem Netzwerk vernetzter Recheneinheiten (10, 20, 30, 40, 50, 60) mittels einer verteilten Transaktionsdatenbank (VDB), bei welchem zumindest eine verteilte und mit Blöcken (N) gebildete Transaktionsdatenbank (VDB) herangezogen wird und bei welchem Daten in Form von Abonnementdaten in zumindest einem Block (N) der Transaktionsdatenbank (VDB) gespeichert werden, wobei der mindestens eine Block (N) mittels einer echten Teilmenge (10, 30, 40; 10, 20, 40; 20, 50, 60) der Recheneinheiten (10, 20, 30, 40, 50, 60) des Netzwerks gespeichert ist, wobei die Teilmenge (10, 30, 40; 10, 20, 40; 20, 50, 60) der Recheneinheiten (10, 20, 30, 40, 50, 60) solche Recheneinheiten (10, 20, 30, 40, 50, 60) umfasst, welche die Abonnementdaten bereitstellen oder empfangen.

2. Verfahren nach dem vorhergehenden Anspruch, bei welchem der mindestens ein Block (N) mittels jeder der Recheneinheiten (10, 20, 30, 40, 50, 60) der Teilmenge (10, 30, 40; 10, 20, 40; 20, 50, 60) gespeichert wird.

3. Verfahren nach einem der vorhergehenden Ansprüche, bei welchem die Abonnementdaten Publikationsdaten sind oder umfassen.

4. Verfahren nach einem der vorhergehenden Ansprüche, bei welchem die Abonnementdaten Subskriptionsdaten sind oder umfassen.

5. Verfahren nach einem der vorhergehenden Ansprüche, bei welchem die Abonnementdaten mittels eines Abonnementbusses festgelegt und/oder ausgetauscht werden.

6. Verfahren nach einem der vorhergehenden Ansprüche, bei welchem die Abonnementdaten mittels eines Brokers festgelegt und/oder ausgetauscht werden.

7. Verfahren nach einem der vorhergehenden Ansprüche, bei welchem die Teilmenge mittels der Abonnementdaten und/oder mittels des Abonnementbusses und/oder mittels des Brokers ermittelt wird.

8. Verfahren nach einem der vorhergehenden Ansprüche, bei welchem der mindestens eine Block (N) Teil eines Pfads (MC1, MC2, MC3) ist, der mittels der echten Teilmenge (10, 30, 40; 10, 20, 40; 20, 50, 60) der Recheneinheiten (10, 20, 30, 40, 50, 60) gespeichert wird.

9. Verfahren nach einem der vorhergehenden Ansprüche, bei welchem der Pfad mittels jeder Recheneinheit (10, 20, 30, 40, 50, 60) der Teilmenge (10, 30, 40; 10, 20, 40; 20, 50, 60) gespeichert wird.

10. Verfahren nach einem der vorhergehenden Ansprüche, bei welchem der Pfad (MC1, MC2, MC3) eine Blockchain und/oder eine Microchain bildet.

11. Verfahren nach einem der vorhergehenden Ansprüche, bei welchem die verteilte Transaktionsdatenbank (VDB) mehrere Pfade (MC1, MC2, MC3) aufweist, deren Blöcke (N) mittels jeweils echter Teilmengen (10, 30, 40; 10, 20, 40; 20, 50, 60) von Recheneinheiten (10, 20, 30, 40, 50, 60) des Netzwerks gespeichert werden, wobei die echten Teilmengen (10, 30, 40; 10, 20, 40; 20, 50, 60) eine von den echten Teilmengen (10, 30, 40; 10, 20, 40; 20, 50, 60) verschiedene, insbesondere leere, Schnittmenge aufweisen.

12. Computerprogramm welches direkt in einen Speicher einer Recheneinrichtung (10, 20, 30, 40, 50, 60) des Netzwerks ladbar ist, mit Programm-Mitteln, um die Schritte des Verfahrens nach einem der Ansprüche 1 bis 11 auszuführen.

13. Netzwerk vernetzter Recheneinheiten, speichernd eine verteilte Transaktionsdatenbank (VDB) umfassend Blöcke (N), in welche Abonnementdaten nach einem der Verfahren nach einem der vorhergehenden Ansprüche gespeichert werden.
